# EUROPEAN PATENT APPLICATION

(11) **EP 1 666 577 A2**
(43) Date of publication of application: **07.06.2006**
(21) Application number: 05076242.6
(22) Date of filing: 27.05.2005
(51) Int. Cl.: C11B 1/04, C11B 1/06, A23N 1/02

(54) **System for the extraction of the liquid component from drupes mounted on the flat bed of a trailer vehicle with direct feeding system**

(30) Priority: 03.12.2004 IT RE20040147
(71) Applicant: Ing. Bonfiglioli S.p.A., 40050 Castello d'Argile (Bologna) (IT)
(72) Inventor: Bonfiglioli, Giancarlo Ing. Bonfiglioli S.p.A., 40050 Castello d'Argile(Bologna) (IT)
(74) Representative: Corradini, Corrado

(57) **Abstract**

System (1) for the extraction of the liquid component from drupes mounted on a flat bed (100) of a trailer, said system (1) comprising a press (2) adapted to crush the drupes to extract a paste; at least one kneader (3) to homogenise the paste from the press (2); a decanter (4) for the extraction of the liquid component from the homogenised paste from the kneader (3), a centrifugal separator (5) and an olive washing machine (8) characterised in that the drupes on exit from the washing machine (8) are fed into the press (2) by means of an Archimedean screw (10) associated in a lateral and direct manner with the press (2).

## Description

The present invention refers to a system for the extraction of the liquid component from drupes suitable for being completely mounted on a trailer that can be attached to a motor vehicle in accordance with the preamble in claim 1.

Installations such as oil mills for the production of olive oil through olive crushing are already known to the art.

Today, the production of olive oil from olives is performed using continuous type installations, wherein the olives are first pitted to obtain a paste.

After this operation the paste is pushed into a kneader and from there into a horizontal centrifuge known as a decanter, which extracts the oil from the olive paste.

Lastly the liquid component on exit from the decanter and known as oily must is sent to a vertical centrifuge to separate the oil and water.

The use of an installation that can be mounted on the flat bed of a trailer as described in the application for patent RE2004A000014 by the same Applicant in order to reduce system size while maintaining the high productive capacity typical of fixed installations provides undeniable advantages.

The olives from the washing machine are fed into the press from above, that is, the washed olives are dropped in a direction parallel to the press axis.

This brings certain disadvantages, including the fact that the press must be open at the top, meaning that insects, dust and other material from the surrounding environment can easily enter the press.

Therefore it is extremely important that a system be provided for the extraction of the liquid component from drupes mounted on a trailer flat bed, having a means for direct feeding of the olives into the press without the press being open to the elements.

The aim of the present invention is to provide an improved system for the extraction of the liquid component from drupes, mounted on the flat bed of a trailer having the structural and functional characteristics able to satisfy the aforesaid necessities, while eliminating the problems described in reference to known technical state of the art.

This aim is achieved by means of a system for the extraction of the liquid component from drupes mounted on the flat bed of a trailer in accordance with claim 1.

The subordinate claims describe preferred and particularly advantageous embodiments of the system according to the invention.

Further characteristics and advantages of the invention will be made clear in the following description provided as an example but not to be considered limiting in any way, with reference to the appended drawings wherein:
- Figure 1 shows a side view of a system for the extraction of the liquid component from drupes mounted on the flat bed of a trailer according to a first embodiment of the present invention;
- Figure 2 shows a view from above of the system illustrated in figure 1;
- Figure 3 shows a side view of the system according to a second embodiment of the present invention;
- Figure 4 shows a view from above of the system illustrated in figure 3;
- Figure 5 shows a view of a detail of the system shown in figure 1 from the direction indicated by the arrow in figure 1.

With reference to the aforesaid figure, the system for the extraction of the liquid component from drupes is identified throughout by the numeral 1, said system being mounted on a flat bed 100, according to the present invention.

To define the system very briefly, the system 1 for olive oil production mounted on a flat bed 100 comprises an olive press 2, at least one kneader 3, a decanter 4, and a centrifugal separator 5 (simply called centrifuge) as shown schematically in the figure, where the various connections between the devices are not shown since they are easily adapted from known state of the art.

Operatively, once the olives have been harvested, defoliated and cleaned of twigs, they are fed into a delivery hopper 6, from which exits a first conveyor system, for example an elevator 7 with a conveyor belt, preferably made from antacid rubber.

In the illustrated example, the elevator 7 with conveyor belt can be moved from the working position, as shown in the figure, to a transport position, not illustrated, said change from one position to the other being possible by fixing the elevator 7 on a hinged device at the rear end of the flat bed 100.

In practice the elevator 7 is completely raised from the ground during transportation.

The elevator 7 conveys the olives from the hopper 6 to a washing device 8, preferably a hydropneumatic system, wherein the olives are subject to delicate washing action, generally at ambient temperature.

After the washing operation in the washer 8, the washed olives are transferred to the olive press 2 by a suitable conveyor means 10 which will be described in more detail further on.

Under the olive press 2 are located the kneaders 3 into which the crushed product from the press 2 is poured.

Each kneader 3 comprises a homogenising tank, generally made of stainless steel, equipped with rotating kneading blades having a suitable form, and motor driven to create a delicate mixing action to prevent the forming of deposit layers on the walls of the tank.

The paste is sent from the kneaders 3 to the decanter 4 by means of a pump, generally a variable speed single screw type.

The decanter 4 is a horizontal axis centrifugal separator, which separates the three components present in the paste: oil, water and pulp, which are divided by the centrifugal force because of the difference in their specific weights.

Practically speaking, the decanter 4 is a machine with a motor 9 driven endless Archimedean screw.

Said decanter can be configured with two or three outlets and the addition of water is foreseen during decanter action.

The liquid component or oily must is pumped as it is discharged to the centrifuge separator 5.

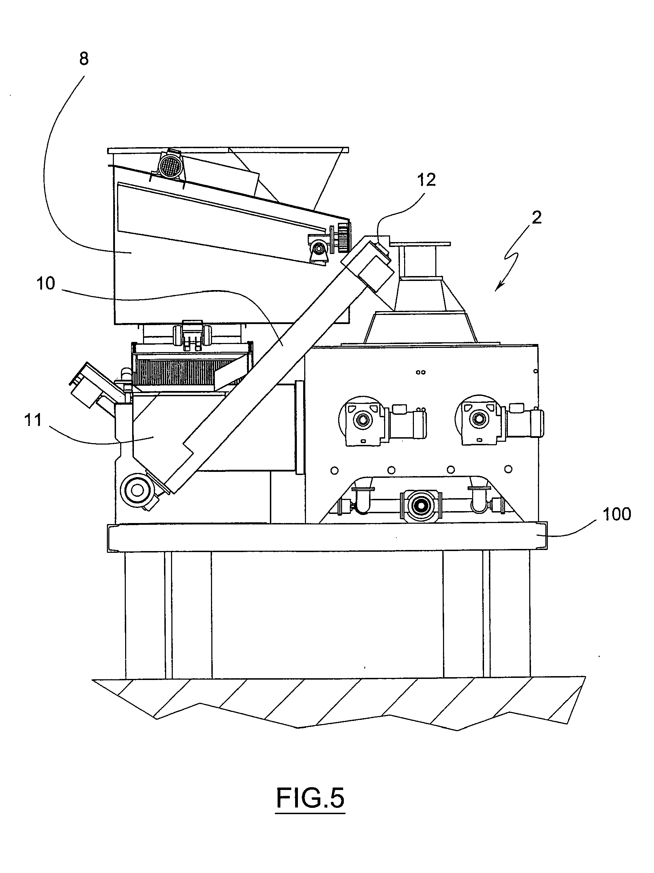

According to the present invention, and as can be clearly seen in figure 5, the conveyor system 10 used to feed the olives from the washing machine 8 to the press 2 comprises an Archimedean screw 10 set on an angle, and having the lower end inserted inside the collector 11 where the olives are deposited on exit from the washing machine 8, and having the upper end associated with the upper end of the press 2.

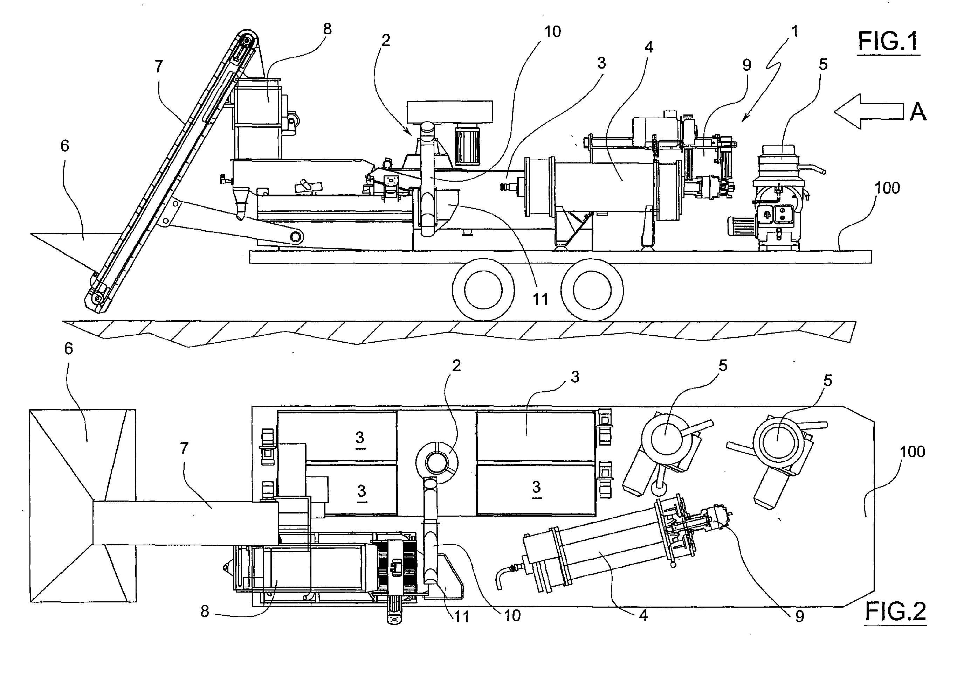

In a first embodiment of the present invention, shown in figures 1 and 2, the Archimedean screw 10 is associated with press 2 in such a manner to feed the olives in a lateral and radial manner in relation to the press 2.

Furthermore, the press 2 is closed to the exterior and communicates only with the Archimedean screw 10 equipped with a hood 12 (Figure 5) that covers the passage area of the olives from the Archimedean screw 10 to the press 2.

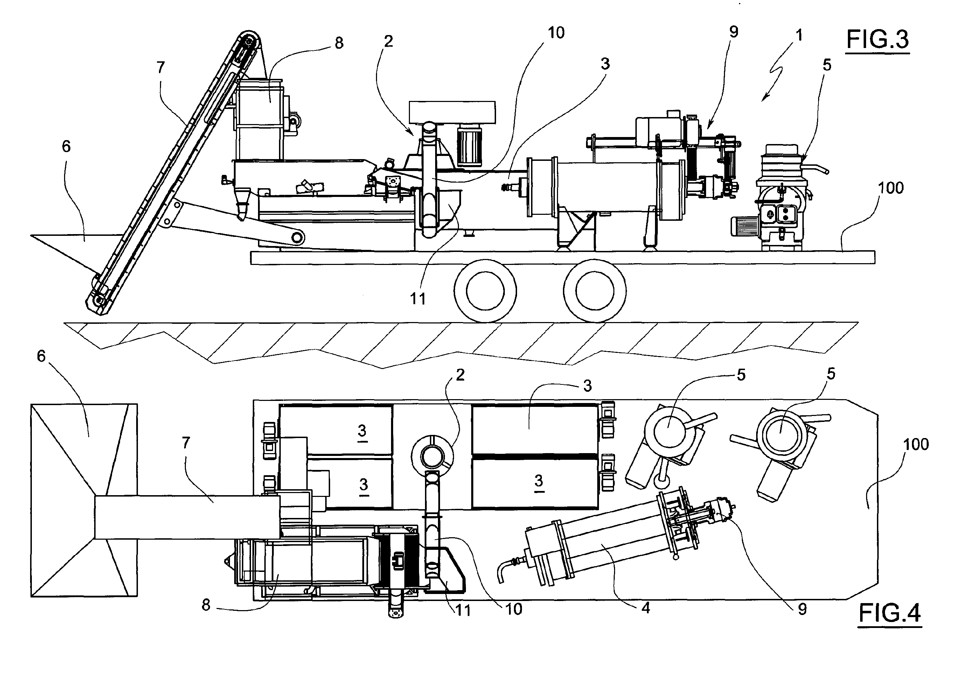

According to a second embodiment of the present invention, the olives are fed to press 2 in a tangential manner in relation to press 2, as shown in figures 3 and 4.

As can be clearly understood from the aforesaid description, the present invention is able to satisfy the needs and overcome the problems described in the introductory part of the present description in reference to known technical state of the art.

In fact the direct feeding of the olives into the press by means of the Archimedean screw positioned in a radial manner or in a tangential manner makes it possible to adopt suitable measures to prevent the entry of undesirable materials into the press.

Naturally a technician skilled in the art will be able to apply numerous modifications and variants to the aforesaid system in order to satisfy specific and additional needs, while remaining within the context of the protection of the present invention as defined in the following claims.

## Claims

1. System (1) for the extraction of the liquid component from drupes mounted on a flat bed of a trailer (100), said system (1) comprising a press (2) adapted to crush the drupes to extract a paste; at least one kneader (3) to homogenise the paste from the press (2); a decanter (4) for the extraction of the liquid component from the homogenised paste from the kneader (3), a centrifugal separator (5) and an olive washing machine (8) **characterised in that** the drupes on exit from the washing machine (8) are fed into the press (2) by means of an Archimedean screw (10) associated laterally and directly with the press (2).

2. System (1) according to claim 1, wherein said Archimedean screw (10) is associated in a radial manner with said press (2).

3. System (1) according to claim 1, wherein said Archimedean screw (10) is associated in a tangential manner with said press (2).

4. System (1) according to claim 1 wherein the point in which the Archimedean screw (10) is associated with the press (2) is covered by a hood (12).

5. System (1) according to claim 1 wherein said Archimedean screw (10) is positioned on an angle having the lower end inserted inside a collector (11) where the olives are deposited on exit from the washing machine (8).
